# EUROPEAN PATENT APPLICATION

(11) **EP 0 700 209 A2**
(43) Date of publication of application: **06.03.1996**
(21) Application number: 95113164.8
(22) Date of filing: 22.08.1995
(51) Int. Cl.: H04N 5/64

(54) **Television cabinet particularly for modular furniture**

(30) Priority: 02.09.1994 IT PD940152
(71) Applicant: MAIOR CUCINE S.p.A., I-33070 San Cassiano Di Brugnera, (Pordenone) (IT)
(72) Inventor: Bortolotto, Luigi, I-33080 Prata, PN (IT)
(74) Representative: Modiano, Guido, Dr.-Ing.

(57) **Abstract**

A television cabinet (10) that can be structurally integrated in a piece of modular furniture. The cabinet (10) has a box-like flush-mount structure (12) that constitutes the frame for a cathode-ray tube (19), the associated audio/video electronic and electromechanical equipment (20), and the adjustment and control devices. One or more front regions and/or the top side and/or the bottom of the box-like structure are provided with holes or grilles (17,18,25,26), thus connecting the inside of the structure (12) to the outside. The box-like structure (12) may be closed with a door (22) made of unidirectionally transparent material.

## Description

The present invention relates to a television cabinet particularly but not exclusively usable for modular furniture.

A conventional television set is substantially constituted by a box-like shell containing a cathode-ray tube, audio/video electronic and electromechanical equipment, and control and adjustment devices.

Today, the widespread use of television sets and their price, which is within the reach of many users, allow a single family or even a single person to own two or three television sets located in different rooms, such as the living-room, the bedroom, or the kitchen.

Such a development in terms of quantity is also associated with a development in terms of aesthetic requirements on the part of users.

Indeed, the television set has increasingly changed from a mere household appliance, with no significant aesthetic pretensions, to being a true video cabinet that must not only work properly but also fit in harmoniously, or at least satisfactorily, with the rest of the furniture that is present inside the room.

The television set, therefore, now has a rather significant interior-decoration function.

It should also be noted that, as already mentioned, since the television set must be placed in different rooms, it must integrate aesthetically in rooms that are styled very differently from one another.

This aesthetic and interior-decoration requirement has been perceived by many manufacturers, who have produced several television set models whose shell is actually a piece of furniture structurally and stylistically conceived independently in a more or less elegant fashion and therefore adaptable and integratable to a greater or lesser extent in the different rooms.

Despite the variety of models now available, these models have some drawbacks.

In particular, the stylistic matching between a television cabinet bought separately from the rest of the furniture might provide fairly good aesthetic results but never achieves overall harmonious integration.

Any forced integration, in which the television cabinet is placed inside or amid other existing pieces of furniture, is also extremely troublesome.

Indeed, typically technical drawbacks arise in this situation in addition to the above mentioned aesthetic and styling problems.

In particular, it is known that a television set produces a large amount of heat that must be dissipated as efficiently as possible to avoid compromising the integrity of the electronic and electromechanical circuits that compose it.

Therefore, placing a television cabinet in a confined space with no ventilation can lead to an early breakdown of its parts and consequently to inevitable maintenance or even replacement.

These are the problems that so far, in the development of modular kitchens or of modular furniture, have prevented the presence of television sets, differently from other electric household appliances such as washing machines, dishwashers, ovens, refrigerators, etc.

As far as independently-designed television sets are concerned, it is known that models of said television sets are commercially available which are substantially constituted by a parallelepiped or by another geometrical solid and are absolutely uniform in color (usually dark colored if not black), to such an extent that in the off or stand-by modes the screen side cannot be distinguished and becomes evident only when the television set is switched on.

Although these television sets achieve an assured aesthetic effect if they are considered on their own, they are often difficult to harmonize in the overall interior decoration context from a stylistic point of view.

A principal aim of the present invention is to provide a television cabinet that solves the above mentioned drawbacks of conventional models and which can be included particularly harmoniously and with a good aesthetic and stylistic effect in modular kitchens, multi-function furniture for living-rooms and sitting-rooms, furnished walls, and in any case in any stylistically coordinated interior-decoration structure.

An object of the present invention is to provide a television cabinet that can operate in an optimum manner even in confined spaces with no natural ventilation.

Another object of the present invention is to provide a television cabinet that can be manufactured with conventional technologies and optionally with modular and/or standardized systems.

Another object of the present invention is to provide a television cabinet the costs whereof are comparable with those of conventional models.

Another object of the present invention is to provide a television cabinet in which any maintenance operations do not entail substantially greater difficulties than those of conventional models.

With the foregoing and other objects in view, the invention provides a television cabinet, characterized in that it is a part of, or can be structurally integrated in, a piece of modular furniture, and in that it comprises a box-like flush-mount structure that constitutes the frame for a cathode-ray tube, the associated audio/video electronic and electromechanical equipment, and the adjustment and control devices, one or more front regions and/or the top side and/or the bottom of said box-like structure being provided with holes or grilles that connect the inside of said structure to the outside.

Further characteristics and advantages of the present invention will become apparent from the following detailed description of three embodiments thereof, illustrated by way of non-limitative example in the accompanying drawings, wherein:
figure 1 is a front perspective view of a first embodiment of a television cabinet;
figure 2 is a lateral sectional view of the television cabinet of figure 1, taken along a plane that is parallel to the sides thereof;
figure 3 is a sectional top plan view, taken on a plane that is parallel to the bottom, of another embodiment of a television cabinet according to the invention;
figure 4 is a lateral elevational sectional view of the television cabinet of figure 3, taken along a plane that is parallel to the sides;
figure 5 is a front view of a second embodiment of a television cabinet;
figure 6 is a sectional top plan view of the television cabinet of figure 5, taken along a plane that is parallel to the bottom;
figure 7 is a perspective view of a third embodiment of a television cabinet according to the invention.

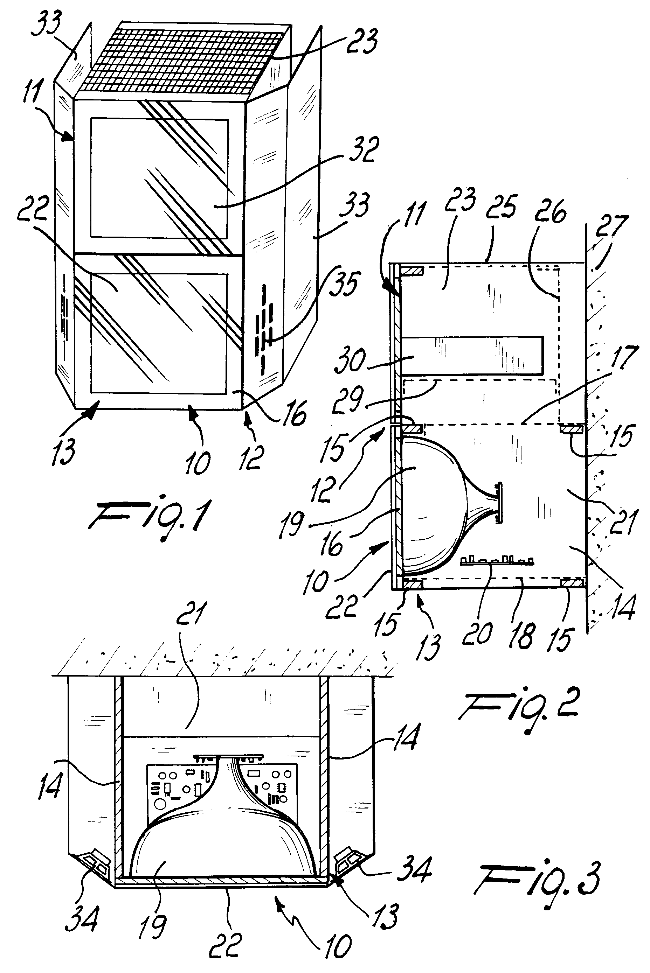

With reference to figures 1 to 4, a television cabinet according to the invention, in a first embodiment, is generally designated by the reference numeral 10.

In this first embodiment, the television cabinet 10 has, above it, an auxiliary compartment 11, together with which it forms a suspended wall unit 12.

The television cabinet 10 is constituted by a flush-mount box-like structure 13 comprising two sides 14 that are kept mutually spaced and parallel by four cross-members 15 located in regions that are adjacent to the front and rear edges.

A frame 16 is fixed to the cross-members 15 located at the front edge and to the front edges of the sides 14.

The box-like structure 13 is furthermore open at the back, while the top and bottom sides, respectively designated by the reference numerals 17 and 18, are constituted by grilles.

The top side 17 and the bottom 18 rest on the corresponding cross-members 15.

A cathode-ray tube 19 is flush-mounted inside the box-like structure 13.

The audio/video electronic and electromechanical equipment 20 is furthermore accommodated inside the box-like structure 13.

An interspace 21 is formed between the cathode-ray tube 19 and the back, which in this case is constituted by a wall surface or by another surface against which the television cabinet 10 abuts; said interspace forms a ventilation and heat dispersion duct connected to the top side 17 and to the bottom 18.

A door 22 made of unidirectionally transparent material is fixed to the frame 16.

As regards the auxiliary compartment 11, it is composed of two sides 23 that substantially prolong the sides 14 vertically and are kept spaced and parallel by the two cross-members 15 related to the top side 17 and by a cross-member 24 located at the top side 25 of the auxiliary compartment 11.

The auxiliary compartment 11 is provided with a grilled top side 25 and with a grilled element 26 that forms, together with the wall surface 27 or with any other surface against which it abuts, a duct 28 that is connected both to the top side 25 of said auxiliary compartment and to the top side 17.

One or more shelves 29 (only one is shown in the drawings) are furthermore inserted in the auxiliary compartment 11 and are adapted to support a video recorder and/or a satellite decoder and/or a compact disc player, shown schematically in figure 2 and designated by the reference numeral 30.

A frame 31, located adjacent to the upper side of the frame 16, and a door 32, made of unidirectionally transparent material, are fixed frontally to the auxiliary compartment 11.

Corresponding identical depth compensation elements 33 are generally associated with each side of the suspended wall unit 12.

Each one of the depth compensation elements 33 is substantially tubular, with a transverse cross-section shaped like a rectangular trapezoid, in which in particular the diagonal side is assigned to the compensating function, whereas the side that lies at right angles to the top and bottom sides is omitted.

The loudspeakers 34 of the television cabinet 10 are located at said cabinet inside the depth compensation elements 33.

The depth compensation elements 33 are provided, at the loudspeakers 34, with slits 35 to allow sound to pass.

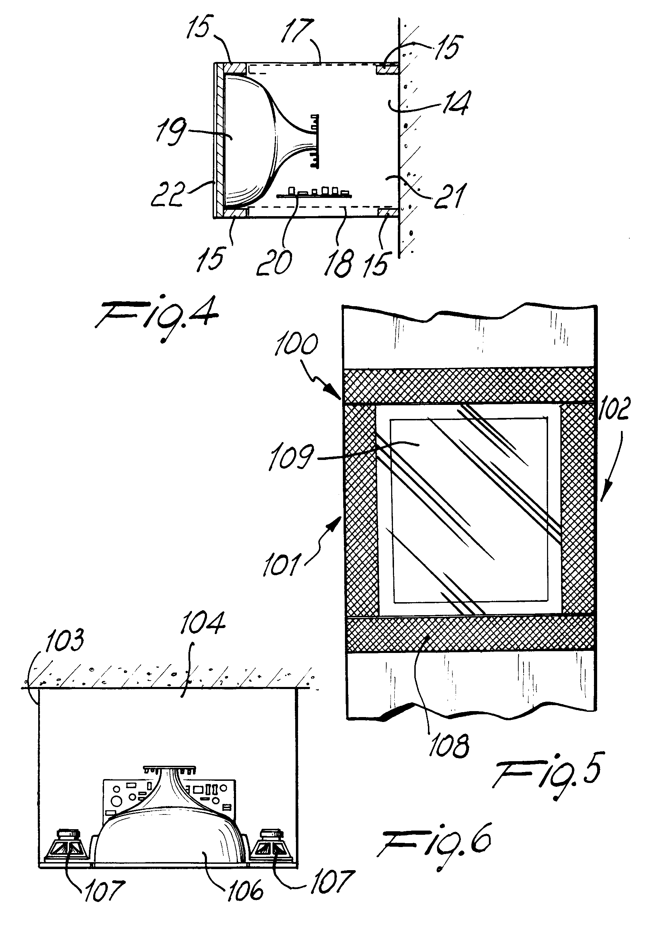

With particular reference to figures 3 and 4, said figures show a possible variation of the suspended wall unit 12 that includes only the television cabinet 10; the previously described features of said cabinet are substantially unchanged.

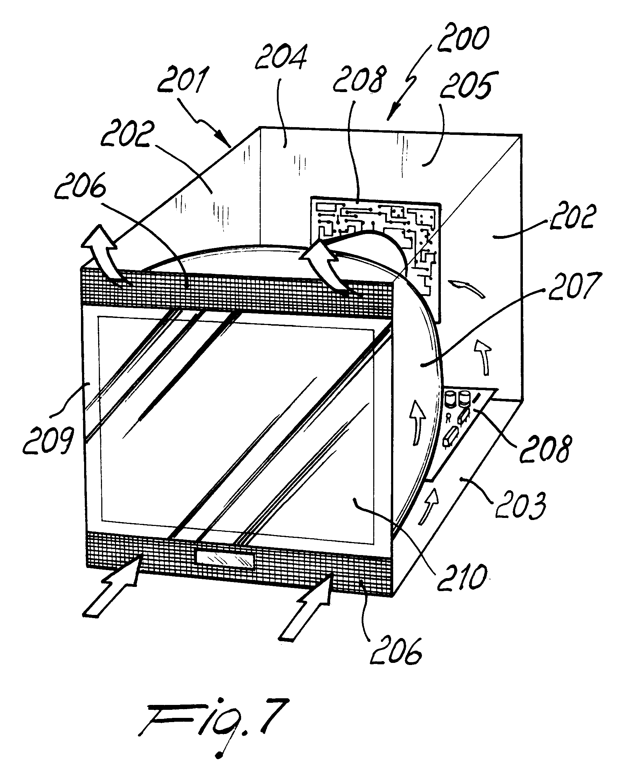

With reference to figures 5 and 6, a second embodiment of a television cabinet according to the invention is generally designated by the reference numeral 100.

In this second embodiment, the television cabinet 100 is built into a vertically elongated piece of furniture 101.

The television cabinet 100 is constituted by a box-like structure 102 comprising two sides 103 that are kept mutually spaced and parallel by cross-members that are not shown in the figures.

In this case, too, the box-like structure 102 is open at the back, whereas its bottom is constituted by a shelf 104.

The top side, not shown in the figures, is constituted by a grille.

A cathode-ray tube 106 and two loudspeakers 107 are recessed inside the box-like structure 102; each loudspeaker is arranged laterally to said cathode-ray tube 106.

A frame 108, constituted by a grille, is fixed frontally to the box-like structure 102; the lateral upright portions of said grille are located in front of the loudspeakers 107.

Said frame 108 supports a door 109 made of unidirectionally-transparent material.

In this second embodiment, too, an interspace 110 connected to the top side is provided between the cathode-ray tube 106 and the bottom, which is constituted by a wall surface or by any other surface against which the box-like structure abuts.

With reference to figure 7, a third embodiment of a television cabinet according to the invention is generally designated by the reference numeral 200.

The television cabinet 200 is constituted by a flush-mount box-like structure 201 that comprises two sides 202 that are kept mutually spaced and parallel by a bottom 203 and by a top side 204.

The box-like structure 201 furthermore has a closed back 205.

Two grilles 206 are fixed frontally with respect to the box-like structure 201, are located respectively at the top side 204 and the bottom 203, and connect the inside of the box-like structure 201 to the outside.

A cathode-ray tube 207 is flush-mounted inside the box-like structure 201 and audio/video electronic and electromechanical equipment 208 is also contained therein.

A frame 209 is also fixed frontally with respect to the box-like structure 201 between the two grilles 206 and in this case supports a plate 210 made of transparent and reflecting material of any color and with any degree of reflection.

Moreover, an insert 211 made of Plexiglas or other equivalent material is fixed at the lower grille 206 for the passage of the signals originating from the remote control.

In practice, it has been observed that the intended aim and objects have been achieved; in particular, it should be noted that the box-like structure with the interspace and the grilled top or bottom sides can be inserted among other pieces of furniture of a modular kitchen or of a furnished wall, the airflow to dissipate the heat produced by the electronic equipment being ensured.

Furthermore, from the above description it is evident that the television cabinet according to the invention can be harmoniously integrated in any structure, even complex and multifunctional ones, from the aesthetic point of view as well.

It should also be noted that the location of the loudspeakers and the possibility of forming auxiliary compartments allows the user to achieve any of the possibilities currently available in the field of high fidelity and of auxiliary electronic equipment for receiving, for example, signals via satellite or for linking up with hi-fi equipment.

The present invention is susceptible of numerous modifications and variations; for example, the back can also be closed with a grilled or non-grilled panel, or with a grilled or non-grilled panel and a grilled complementary panel; moreover, the front closure of the television cabinet may also be omitted or may be provided by means of a rolling shutter that retracts when open, or by means of a transparent door; the depth compensation elements may also be omitted or may be replaced with other elements for connection to the adjacent pieces of furniture or walls.

Finally, if needed by functional requirements, there may also be forced ventilation means, such as fans, placed inside the box-like structure and optionally controlled by a thermostat of a per se known type, oversized electronic components, and filtration elements for fumes, dust, etc. that cooperate with the grilles.

All the details may be replaced with other technically equivalent elements.

In practice, the materials employed, so long as they are compatible with the contingent use, as well as the dimensions, may be any according to the requirements.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. Television cabinet, characterized in that it is a part of, or can be structurally integrated in, a piece of modular furniture, and in that it comprises a box-like flush-mount structure that constitutes the frame for a cathode-ray tube, the associated audio/video electronic and electromechanical equipment, and the adjustment and control devices, one or more front regions and/or the top side and/or the bottom of said box-like structure being provided with holes or grilles that connect the inside of said structure to the outside.

2. Television cabinet according to claim 1, characterized in that an interspace is formed at the back of said box-like structure and forms a duct for ventilation and heat dissipation that is connected to the outside at least at the top side and/or at the bottom of said box-like structure.

3. Television cabinet according to claim 1, characterized in that said box-like structure is of the wall-mount type.

4. Television cabinet according to claim 1, characterized in that said box-like structure is of the vertically elongated type.

5. Television cabinet according to one or more of the preceding claims, characterized in that said box-like structure is at least partially open at the back, said interspace being formed at least partially by the wall surface or by another surface against which said television cabinet abuts.

6. Television cabinet according to one or more of the preceding claims, characterized in that it is provided with at least one adjacent auxiliary compartment for accommodating a video recorder and/or a satellite decoder and/or a compact disc player, said auxiliary compartment having, at its back, if it is located above said television cabinet, a heat dissipation channel connected to the top side of said television cabinet and to its own top side.

7. Television cabinet according to one or more of the preceding claims, characterized in that it comprises forced ventilation means.

8. Television cabinet according to claim 7, characterized in that said forced ventilation means comprise at least one fan that is optionally controlled by a thermostat of a per se known type.

9. Television cabinet according to one or more of the preceding claims, characterized in that it comprises depth compensation means.

10. Television cabinet according to claim 9, characterized in that said depth compensation means comprise at least one box-like element with at least one surface for connecting said television cabinet and the adjacent pieces of furniture.

11. Television cabinet according to one or more of the preceding claims, characterized in that it comprises front opening and closing means.

12. Television cabinet according to claim 11, characterized in that said opening/closing means comprise at least one opening door.

13. Television cabinet according to claim 12, characterized in that said at least one door is made of transparent or nontransparent or unidirectionally-transparent material.

14. Television cabinet according to claim 11, characterized in that said opening/closing means comprise a rolling shutter that retracts when open.

15. Television cabinet according to one or more of the preceding claims, characterized in that it comprises filtration elements that cooperate with said one or more front regions and/or with said bottom and/or with said top side.
